# FASCICULE DE BREVET EUROPEEN

(11) **EP 3 066 350 B1**
(45) Date de publication et mention de la délivrance du brevet: **27.12.2017**
(21) Numéro de dépôt: 14824054.2
(22) Date de dépôt: 28.10.2014
(51) Int. Cl.: F16B 37/06

(54) **ELEMENT DE FIXATION À SERTIR EN AVEUGLE AYANT UNE SURFACE DE PORTANCE ÉLEVÉE**
BEFESTIGUNGSELEMENT FÜR BLINDES CRIMPEN MIT GROSSER LASTTRAGENDER OBERFLÄCHE
ATTACHMENT ELEMENT TO BE CRIMPED BLIND HAVING A LARGE LOAD-BEARING SURFACE

(30) Priorité: 05.11.2013 FR 1302556
(43) Date de publication de la demande: 14.09.2016
(73) Titulaire: Bollhoff Otalu S.A., 73490 La Ravoire (FR)
(72) Inventeur: JAMBUT, Jean-François, F-73190 Saint Jeoire Prieure' (FR); LEJARS, Patrick, F-73610 St. Alban de Montbel (FR)
(74) Mandataire: Hecké, Gérard
(86) Numéro de dépôt international: PCT/FR2014/052735
(87) Numéro de publication internationale: WO 2015/067875

(56) Documents cités:
- FR-A1- 2 275 676
- GB-A- 646 298
- US-A- 2 236 079

## Description

### Domaine technique de l'invention

L'invention concerne un élément defixation à sertir en aveugle dans un orifice d'un support, ledit élément comprenant un corps métallique composé d'une tête et d'un fût allongé tubulaire subdivisé axialement en une première zone intermédiaire de sertissage et de liaison au support, et une deuxième zone d'extrémité, la première zone étant agencée pour former un bourrelet destiné à pincer le support contre la tête lors du sertissage, le fût étant entouré coaxialement par un tube creux en matière déformable.

### État de la technique

Les éléments à sertir en aveugle sont généralement des écrous, rivets ou goujons destinés à être solidarisés dans un support de faible épaisseur. La matière de ces éléments de fixation est métallique, par exemple en acier, aluminium, laiton. Le corps des éléments de fixation comporte un fût allongé raccordé à une tête qui prend appui sur l'une des faces du support. Le fût est composé d'une zone de sertissage destinée à se déformer en un bourrelet de sertissage, et d'une zone filetée non déformable. Dans le cas d'un écrou, la partie filetée s'étend à l'intérieur du fût tubulaire, et le bourrelet vient pincer le support contre la tête pour assurer le maintien de l'écrou sur le support. La déformation de la zone de sertissage est opérée au moyen d'un outil de pose exerçant une force axiale d'assemblage.

Dans ce type d'éléments de fixation à sertir en aveugle, la fonction de reprise d'effort est réalisée grâce à la formation du bourrelet de retenue en fin d'opération de sertissage. La surface de portance est directement liée au diamètre du trou de passage dans le support. La résistance mécanique de l'assemblage peut alors s'avérer insuffisante sur certains supports.

Une autre technologie connue permet d'obtenir une surface de portance importante, en utilisant des rondelles annulaires larges. La mise en place de ces rondelles nécessite néanmoins un accès des deux côtés du support, et empêche tout montage en aveugle.

Le document GB 646298 décrit un élément de fixation à sertir en aveugle, dans lequel le fût est entouré d'une douille déformable servant de moyen d'étanchéité après sertissage.

### Objet de l'invention

L'objet de l'invention consiste à réaliser un dispositif de fixation à sertir en aveugle sur un support, avec une surface de portance élevée, indépendamment de l'épaisseur et de la matière du support.

Le dispositif de fixation selon l'invention est caractérisé en ce que le tube est formé par un filet ou treillis ouvert à ses deux extrémités, et étant pourvu d'une pluralité de mailles réparties sur la surface latérale cylindrique du fût, ledit tube étant configuré pour être comprimable lors de son montage sur le fût, et déployable lors de la formation du bourrelet de manière à augmenter l'effet de portance après sertissage.

Un tel dispositif de fixation permet de renforcer la tenue mécanique de l'assemblage, en évitant les inconvénients des deux technologies de l'art antérieur. La présence de ce tube déployable lors du sertissage évite de plus la dégradation d'un support de faible résistance mécanique, par exemple en matériau composite.

Selon un mode de réalisation préférentiel, les mailles du filet sont agencées pour se resserrer entre elles dans un état comprimé lors du montage sur le fût, et pour se détendre vers un état non comprimé lors du sertissage.

Le filet peut être réalisé en métal déployé ou perforé, en tissu, en tricot ou en matériau hybride plastique-métal..

Selon une caractéristique de l'invention, le filet est apte à se déformer élastiquement dans l'état comprimé pour présenter une courbure prédéterminée par rapport à la direction axiale du fût. La formation du bourrelet de sertissage provoque une inversion de la courbure du filet avec un effet de bascule engendrant un déploiement radial du filet apte à constituer une rondelle prenant appui contre le support avec une large surface de portance.

Le tube peut avoir une longueur axiale supérieure à celle du fût, l'une des extrémités étant en butée contre la tête, et l'autre extrémité étant maintenue par un arrêt ménagé à l'extrémité du fût, la courbure du filet résultant de l'effet de compression des mailles dans l'état comprimé avant l'opération de sertissage.

Selon une variante de réalisation, la séquence de montage du tube sur le fût est modifiée, étant donné que le filet du tube est mis en forme définitive dès le départ. La partie inférieure de la tête du dispositif de fixation est pourvue à cet effet d'une embase équipée d'une rainure annulaire, dans laquelle est logée l'extrémité supérieure du tube. L'extrémité inférieure du tube reste maintenue par l'arrêt à la base du fût. Le tube est ainsi mis sous tension pour l'amener à une forma sensiblement cylindrique autorisant le passage dans l'orifice du support. L'opération de sertissage par intervention de l'outil de pose provoque ensuite la formation du bourrelet, ce qui ramène le filet de la à sa forme initiale déployée en apportant un effet de portance.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 montre une vue schématique de l'écrou constituant le dispositif de fixation selon l'invention, avant assemblage du tube sur le fût ;
- la figure 2 représente l'écrou équipé du tube après une phase d'assemblage par bouterollage effectuée au pied du fût pour solidariser le filet du tube au fût ;
- les figures 3A et 3B illustrent des vues partielles du filet, avec les mailles respectivement dans l'état non comprimé avant la pose sur le fût, et dans l'état comprimé après bouterollage ;
- la figure 4 est une vue en coupe axiale de la figure 2, montrant l'assemblage du fût bouterollé avec le filet, prêt à être introduit dans l'orifice du support ;
- la figure 5 est une vue du dispositif de fixation avec le filet, l'ensemble étant serti et posé en aveugle sur le support ;
- la figure 6 est une vue en coupe de la figure 5 en fin de pose de sertissage ;
- la figure 7 est une vue en coupe d'une variante de réalisation, le dispositif étant prêt à être introduit dans l'orifice du support ;
- la figure 8 montre la phase de pose du dispositif de la figure 7 ;
- la figure 9 est une vue en coupe axiale de la figure 8,montrant le dispositif posé sur le support.

### Description détaillée de l'invention

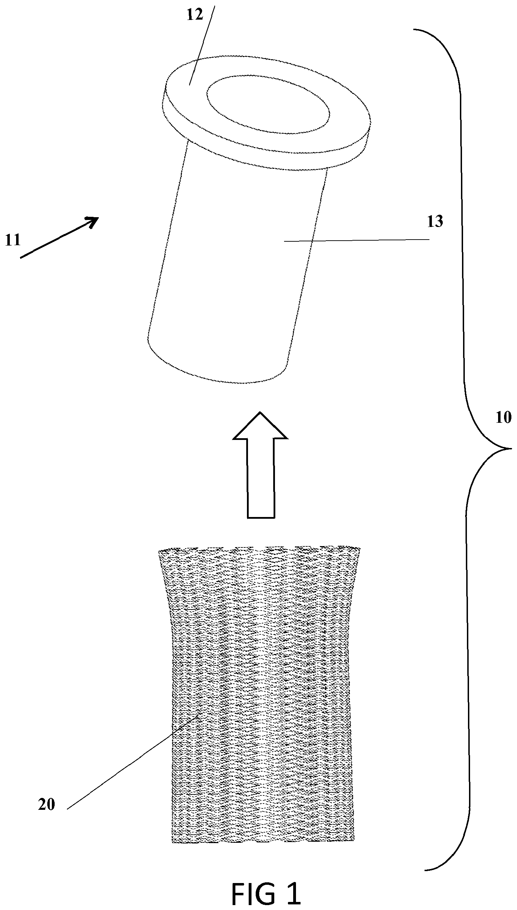

Sur la réalisation des figures 1 à 6, le dispositif de fixation 10 est constitué à titre d'exemple par un écrou à sertir, ayant un corps 11 métallique composé d'une tête 12 annulaire et d'un fût 13 allongé tubulaire. Le fût 13 présente un diamètre extérieur inférieur à celui de la tête 12, et est subdivisé axialement en plusieurs parties distinctes, comprenant une zone intermédiaire 14 de sertissage et de liaison au support, et une zone d'extrémité 15 taraudée à filetage 16 interne.

Le support 17 de faible épaisseur, peut être de toute nature, notamment une tôle métallique ou un panneau en matière plastique. La tête 12 annulaire peut être plate et de section circulaire ou polygonale, et est destinée à venir en appui sur l'une des faces du support 17 après introduction du fût 13 dans un orifice 18 dudit support.

L'épaisseur de la zone intermédiaire 14 de sertissage et de liaison est réduite par rapport à celle de la zone d'extrémité 15, de manière à se déformer pour la formation du bourrelet 19 de sertissage qui vient pincer le support 17 contre la tête 12.

Pour augmenter l'effet de portance dans le but de mieux répartir et renforcer l'effort de pincement sur le support 17 après sertissage de l'écrou, un tube 20 creux en matière déformable est préalablement enfilé axialement sur le fût 13 (figure 1).

Le tube 20 est réalisé à titre d'exemple par un filet ou treillis tubulaire ouvert à ses deux extrémités, et ayant une pluralité de mailles 21 réparties régulièrement sur toute la surface latérale cylindrique. La longueur axiale du filet est un peu supérieure à celle du fût 13, et chaque maille 21 présente une forme de parallélogramme à côtés égaux entre eux.

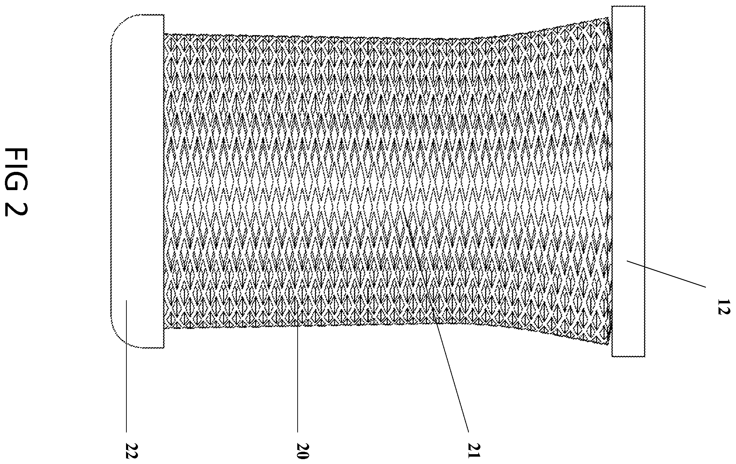

Après introduction du filet sur le fût 13, une opération de bouterollage (figure 2) est effectuée à la base de l'écrou pour solidariser le filet au fût 13. Cette opération de bouterollage crée un arrêt 22 en forme de gouttière en U annulaire, dans laquelle est positionnée et maintenue l'extrémité inférieure du filet. L'extrémité supérieure du filet vient en butée contre l'épaulement interne de la tête 12. Tout autre procédé peut être utilisé pour la formation de l'arrêt 22.

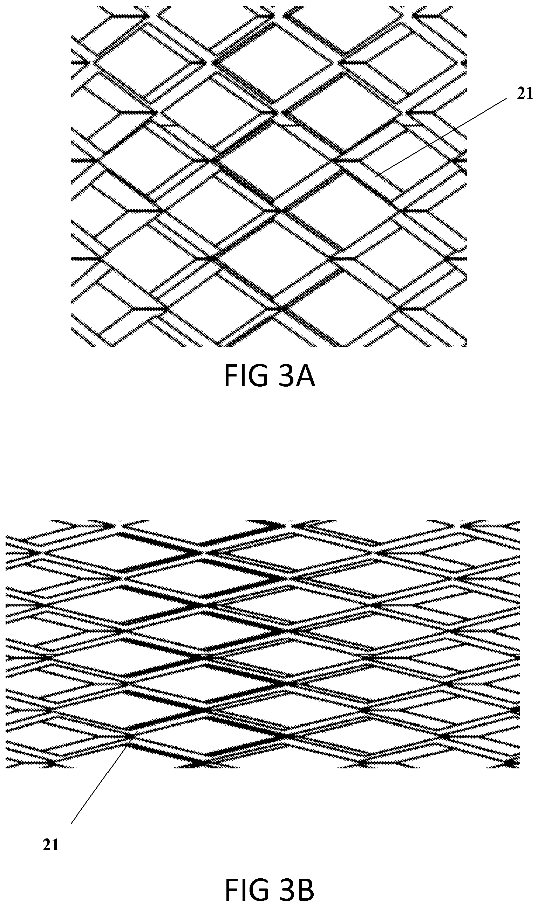

La figure 3A montre une vue partielle du filet avec les mailles 21 représentées dans un état non comprimé avant l'opération de bouterollage.

La figure 3B illustre le filet dans l'état comprimé des mailles 21, au cours de laquelle les mailles se sont resserrées entre elles après l'opération de bouterollage. Le profil parallélépipédique des mailles 21 s'est déformé sous l'action de compression verticale exercée lors de l'introduction du filet entre la tête 12 et l'arrêt 22.

Préférentiellement, le filet du tube 20 peut être réalisé en métal déployé ou métal perforé, en tricot, en tissu, ou même en matériau hybride plastique-métal.

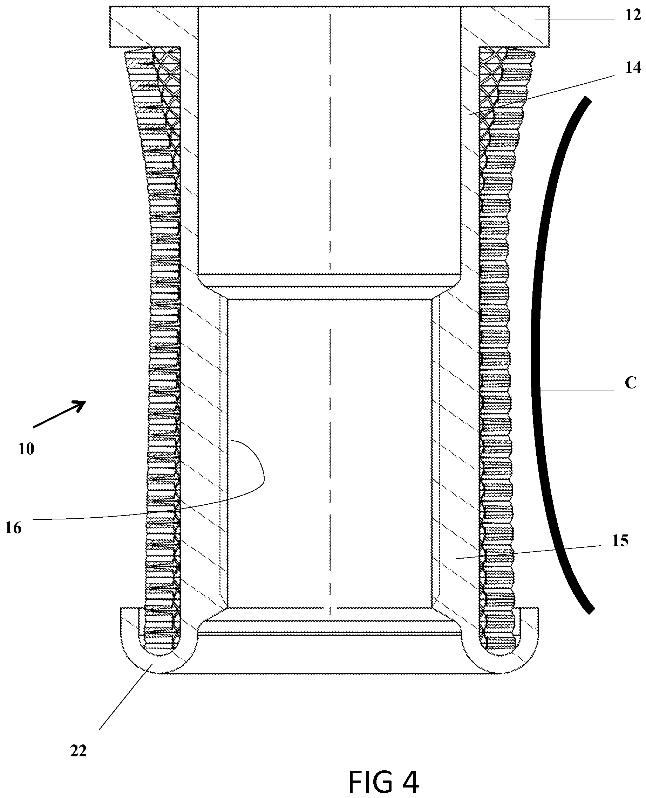

La figure 4 montre une vue en coupe verticale du dispositif de fixation 10 bouterollé avec le tube 20, l'ensemble étant prêt à être introduit dans l'orifice 18 du support 17. L'effet de compression des mailles 21 provoque une courbure élastique du filet de manière à lui conférer un galbe prédéterminé (représenté schématiquement de manière accentuée par la trace de la courbe C).

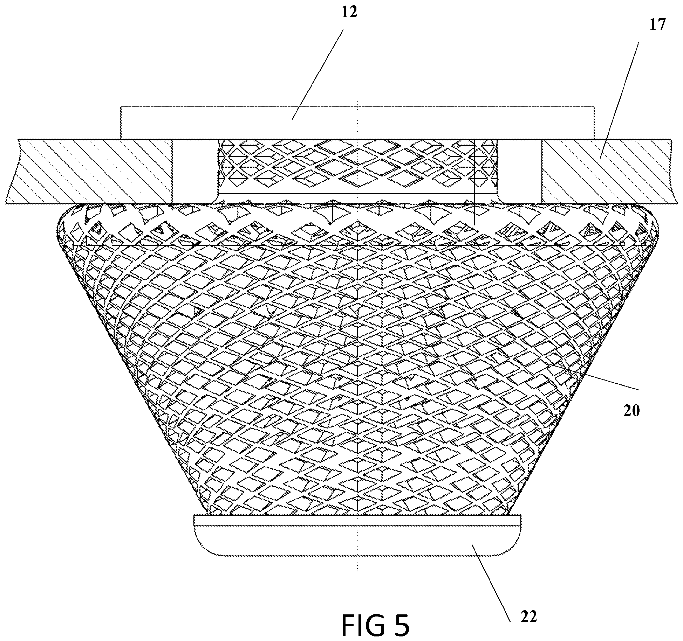

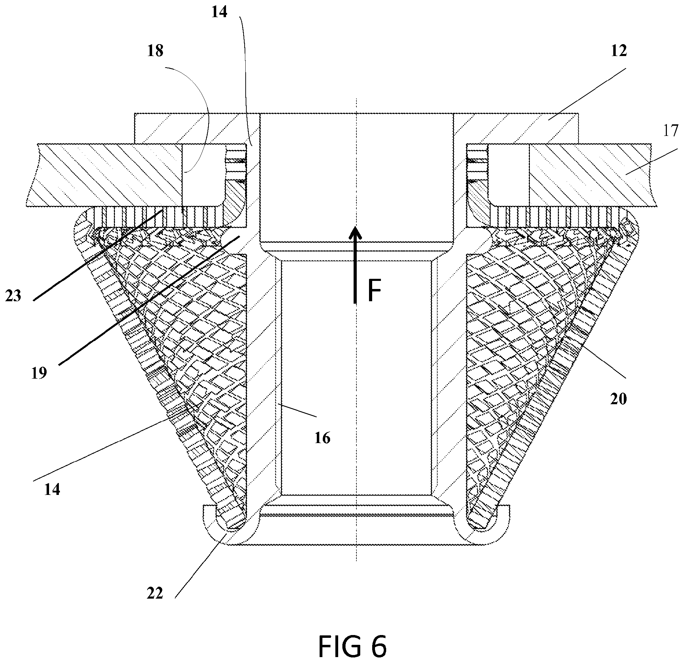

En référence aux figures 5 et 6, on introduit l'ensemble écrou et tube précité dans l'orifice 18 du support 17, et on procède au sertissage en exerçant une traction dans le sens de la flèche F au moyen d'un outil de pose (non représenté) qui traverse la tête 12 et est vissé dans le filetage 16. La formation du bourrelet 19 de sertissage de la zone intermédiaire 14 du fût 13, provoque une inversion de la courbure du filet avec un effet de bascule qui entraîne un déploiement radial du tube 20. A l'issue de cette mise en place, les mailles 21 du tube 20 se détendent depuis l'état comprimé vers l'état non comprimé. La partie intermédiaire 23 du tube 20 s'est transformée en rondelle prenant appui contre la face inférieure du support 17 avec une large surface de portance. La partie supérieure du tube 20 traverse l'orifice 18 et reste en butée contre la tête 12. La partie inférieure du tube 20 est tronconique, et relie la partie intermédiaire 23 à l'arrêt 22.

La formation de cette rondelle après déploiement du tube 20 est déclenchée suite à l'action du bourrelet 19 qui provoque l'effet de bascule sur le tube 20 dont les mailles 21 étaient préalablement comprimées. Il en résulte une meilleure répartition de l'effort exercé sur le support 17 sur lequel est fixé l'écrou. Les contraintes mécaniques sur le support 17 sont ainsi réduites, et évite sa dégradation lors du sertissage, notamment dans le cas où le support 17 est non métallique, par exemple en matériau composite.

La présence sur l'écrou du tube 20 comprimable et déployable permet d'avoir un volume de matière disponible qui va créer la rondelle avec une surface de portance élevée.

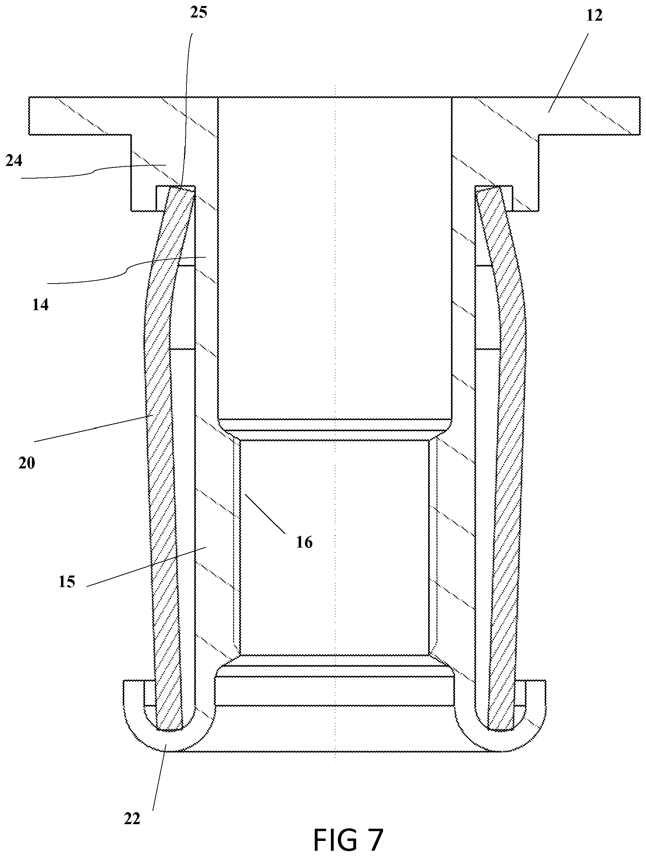

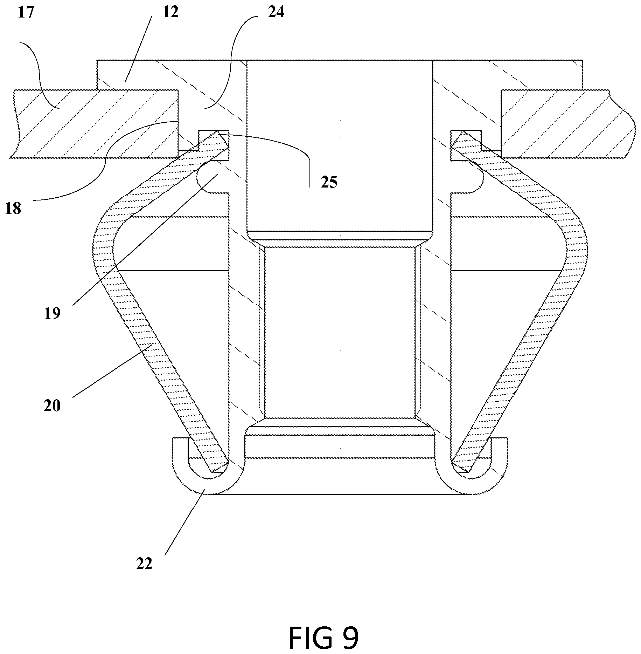

Selon la variante de réalisation illustrée aux figures 7 à 9, la séquence de montage du tube 20 déformable est modifiée par rapport à celle de l'écrou des figures 1 à 6. Les mêmes numéros de repères seront utilisés pour désigner des pièces identiques ou similaires.

Le filet du tube 20 est mis en forme définitive dès le départ. La partie inférieure de la tête 12 est pourvue à cet effet d'une embase 24 équipée d'une rainure 25 annulaire. L'extrémité supérieure du filet est logée dans la rainure 25, et l'extrémité inférieure est engagée dans l'arrêt 22 après bouterrolage. Le filet est ainsi mis sous tension pour l'amener à une forme sensiblement cylindrique autorisant le passage dans l'orifice 18 du support 17 (voir figure 7).

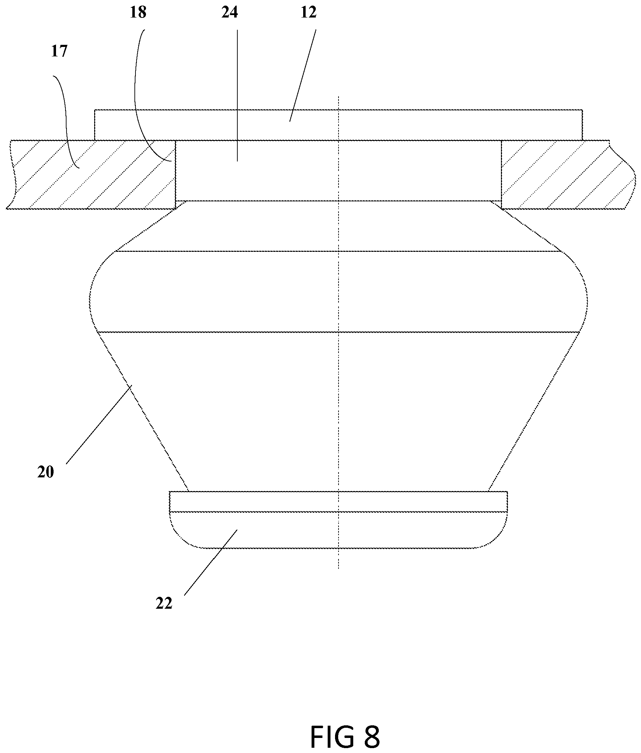

L'opération de sertissage par intervention de l'outil de pose provoque la formation du bourrelet 19, ce qui ramène le filet de la figure 7 à sa forme initiale déployée (figure 8) en apportant un effet de portance important sous la face inférieure du support 17. Le diamètre extérieur de l'embase 24 correspond sensiblement à celui de l'orifice 18, de manière à éviter tout jeu lorsque l'écrou est serti sur le support 17.

## Revendications

1. Elément de fixation (10) à sertir en aveugle dans un orifice (18) d'un support (17), ledit élément comprenant un corps (11) métallique composé d'une tête (12) et d'un fût (13) allongé tubulaire subdivisé axialement en une première zone intermédiaire (14) de sertissage et de liaison au support (17), et une deuxième zone d'extrémité (15), la première zone étant agencée pour former un bourrelet (19) destiné à pincer le support (17) contre la tête (12) lors du sertissage, le fût (13) étant entouré coaxialement par un tube (20) creux en matière déformable,
**caractérisé en ce que** le tube (20) est formé par un filet ou treillis ouvert à ses deux extrémités, et étant pourvu d'une pluralité de mailles (21) réparties sur la surface latérale cylindrique du fût (13), ledit tube étant configuré pour être comprimable lors de son montage sur le fût (13), et déployable lors de la formation du bourrelet (19) de manière à augmenter l'effet de portance après sertissage.

2. Elément de fixation selon la revendication 1, **caractérisé en ce que** le filet est réalisé en métal déployé ou perforé.

3. Elément de fixation selon la revendication 2, **caractérisé en ce que** les mailles (21) du filet sont agencées pour se resserrer entre elles dans un état comprimé lors du montage sur le fût (13), et pour se détendre vers un état non comprimé lors du sertissage.

4. Elément de fixation selon la revendication 3, **caractérisé en ce que** les mailles présentent un profil parallélépipédique.

5. Elément de fixation selon la revendication 3 ou 4, **caractérisé en ce que** le filet est apte à se déformer élastiquement dans l'état comprimé pour présenter une courbure prédéterminée par rapport à la direction axiale du fût (13), et que la formation du bourrelet (19) de sertissage provoque une inversion de la courbure du filet avec un effet de bascule engendrant un déploiement radial du filet apte à constituer une rondelle prenant appui contre le support (17) avec une large surface de portance.

6. Elément de fixation selon la revendication 5, **caractérisé en ce que** le tube (20) possède une longueur axiale supérieure à celle du fût (13), l'une des extrémités étant en butée contre la tête (12), et l'autre extrémité étant maintenue par un arrêt (22) du fût (13), la courbure du filet résultant de l'effet de compression des mailles dans l'état comprimé avant l'opération de sertissage.

## Patentansprüche

1. Befestigungselement (10) zum Blindnieten in eine Öffnung (18) eines Trägers (17), wobei das Element einen Metallkörper (11) aufweist mit einem Kopf (12) und einem langen, rohrförmigen Schaft (13), der axial in eine erste Niet-Zwischenzone (14) und Verbindungszone mit dem Träger (17) und eine zweite Endzone (15) unterteilt ist, wobei die erste Zone derart angeordnet ist, dass sie einen Wulst (19) bildet, der den Träger (17) während des Nietens gegen den Kopf (12) drücken soll, wobei der Schaft (13) koaxial von einem hohlen Rohr (20) aus verformbarem Material umgeben ist,
**dadurch gekennzeichnet, dass** das Rohr (20) durch ein an seinen beiden Enden offenes Netz oder ein Geflecht gebildet und mit einer Vielzahl von Maschen (21) versehen ist, die auf der zylindrischen Seitenfläche des Schaftes (13) verteilt sind, wobei das Rohr so ausgebildet ist, dass es während seiner Montage an dem Schaft (13) zusammendrückbar und während der Bildung des Wulstes (19) entfaltbar ist, um den Effekt der Tragfähigkeit nach dem Nieten zu erhöhen.

2. Befestigungselement nach Anspruch 1, **dadurch gekennzeichnet, dass** das Netz aus Streckmetall oder gelochtem Metall hergestellt ist.

3. Befestigungselement nach Anspruch 2, **dadurch gekennzeichnet, dass** die Maschen (21) des Netzes derart angeordnet sind, dass sie sich während der Montage an dem Schaft (13) in einen komprimierten Zustand zusammenziehen, und sich während des Nietens zu einem nicht komprimierten Zustand hin entspannen.

4. Befestigungselement nach Anspruch 3, **dadurch gekennzeichnet, dass** die Maschen ein quaderförmiges Profil aufweisen.

5. Befestigungselement nach Anspruch 3 oder 4, **dadurch gekennzeichnet, dass** sich das Netz in dem komprimierten Zustand elastisch verformt, um in Bezug auf die axiale Richtung des Schaftes (13) eine vorgegebene Krümmung aufzuweisen, und dass die Bildung des Nietwulstes (19) zu einer Umkehrung der Krümmung des Netzes mit einem Kippeffekt führt, der ein radiales Entfalten des Netzes erzeugt, was geeignet ist, eine Unterlegscheibe zu bilden, die an den Träger (17) mit einer großen tragenden Fläche anstößt.

6. Befestigungselement nach Anspruch 5, **dadurch gekennzeichnet, dass** das Rohr (20) eine größere axiale Länge als die des Schaftes (13) aufweist, wobei eines der Enden an den Kopf (12) anstößt und das andere Ende von einem Stoppelement (22) des Schaftes (13) gehalten wird, wobei sich die Krümmung des Netzes aus der Wirkung der Kompression der Maschen in dem komprimierten Zustand vor dem Nietvorgang ergibt.

## Claims

1. Attachment element (10) to be crimped blind in an opening (18) of a support (17), said element comprising a metal body (11) composed of a head (12) and a ubular elongate shank (13) axially subdivided into a first intermediate area (14) for crimping and joining to the support (17), and a second end area (15), the first area being arranged to form a bead (19) designed to clamp the support (17) against the head (12) when crimping is performed, the shank (13) being coaxially surrounded by a hollow tube (20) made from deformable material,
**characterized in that** the tube (20) is formed by a net or lattice open at its both ends, and is provided with a plurality of meshes (21) arranged on the cylindrical lateral surface of the shank (13), said tube being configured to be compressible when it is fitted on the shank (13) and to be able to be expanded when formation of the bead (19) takes place so as to increase the load bearing effect after crimping.

2. Attachment element according to claim 1, **characterized in that** the net is made from expanded or perforated metal.

3. Attachment element according to claim 2, **characterized in that** the meshes (21) of the net are arranged to tighten on one another in a compressed state when they are fitted on the shank (13), and to slacken to a non-compressed state when crimping is performed.

4. Attachment element according to claim 3, **characterized in that** the meshes present a profile in the form of a parallelepiped.

5. Attachment element according to claim 3 or 4, **characterized in that** the net is able to deform elastically in the compressed state to present a predefined curvature with respect to the axial direction of the shank (13), and that formation of the crimping bear (19) causes a reversal of the curvature of the net with a rocking effect giving rise to a radial extending of the net designed to consist in a washer pressing against the support (17) with a large load bearing surface.

6. Attachment element according to claim 5, **characterized in that** the tube (20) has an axial length larger than that of the shank (13), one of the ends coming up against the head (12), and the other end being maintained by a stop (22) of the shank (13), the curvature of the net resulting from the compression effect of the meshes in the compressed state before the crimping operation.
